(19) Europäisches Patentamt
European Patent Office
Office européen des brevets

(11) **EP 2 715 245 B1**

(12) **EUROPEAN PATENT SPECIFICATION**

(45) Date of publication and mention
of the grant of the patent:
**04.05.2016 Bulletin 2016/18**

(51) Int Cl.:
*F24J 2/12* *(2006.01)* *F24J 2/46* *(2006.01)*
*F24J 2/52* *(2006.01)*

(21) Application number: **12790175.9**

(22) Date of filing: **21.05.2012**

(86) International application number:
**PCT/IB2012/052539**

(87) International publication number:
**WO 2012/160506 (29.11.2012 Gazette 2012/48)**

(54) **METHOD AND APPARATUS FOR MAUFACTURING A PARABOLIC SOLAR COLLECTOR**

VERFAHREN UND VORRICHTUNG ZUM HERSTELLEN EINES PARABOLISCHEN
SONNENKOLLEKTORS

PROCÉDÉ ET APPAREIL POUR LA FABRICATION D'UN COLLECTEUR SOLAIRE PARABOLIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.05.2011 PCT/IB2011/052311**

(43) Date of publication of application:
**09.04.2014 Bulletin 2014/15**

(73) Proprietor: **Ozkul, Tarik**
**34844 Istanbul (TR)**

(72) Inventor: **Ozkul, Tarik**
**34844 Istanbul (TR)**

(74) Representative: **Weickmann & Weickmann**
**PartmbB**
**Maximilianstrasse 4b**
**82319 Starnberg (DE)**

(56) References cited:
**US-A- 3 106 782     US-A- 3 273 156**
**US-A- 3 872 854     US-A- 4 202 715**
**US-A- 4 568 156**

## Description

FIELD

This invention relates to a method and an apparatus for manufacturing a parabolic solar collector.

BACKGROUND

Parabolic solar collectors are among the best known types of solar collectors for concentrating solar radiation to a focal point. Parabolic collectors are also used for concentrating electromagnetic rays to a spot and used onboard satellites as well as in ground stations for concentrating radiation to a sensor. Database indicates there are numerous patents related to parabolic collectors.

Literature survey indicated several documents that summarize state of the art in parabolic solar collectors. One of the documents is authored by H. E. Imadojemu and published in Vol. 36, No. 4 issue in pages pp. 225-237, 1995 of Energy Conversion Management Journal. This document is titled "Concentrating Parabolic Collectors: a Patent Survey". Another article published is by S. Kalogirou and published in the Journal of Recent Patents on Engineering in 2007, issue #1, pages 23-33. The publication by Kalogirou is titled as "Recent Patents in Solar Energy Collectors and Applications". The state of the art in solar collectors is summarized in these articles.

Parabolic solar collectors are type of mirrors which have parabolic shape and installed facing towards sun. The solar rays coming from the mirror are focused to a specific spot where an energy absorber or a secondary mirror is placed. These types of solar collectors are known as "SRTA" which stands for Stationary Reflector/Tracking Absorber configuration. In this particular configuration the solar concentrator is stationary, but due to changing position of sun, the point where the solar radiation is focused changes continuously in a well-defined path. This is where the tracking absorber is used; by placing the absorber always in the focal point of the solar collector, it is possible to receive energy no matter what time of the day is.

The main problem with parabolic type SRTA's is the construction of the parabolic mirror. Although small size parabolic mirrors can be cast efficiently using carefully designed molds, making oversized parabolic mirrors has been difficult and challenging. There have been patents toward methods of making parabolic mirrors such as U.S patent 4,124,277 "Parabolic Mirror Construction" and U.S patent 4,860,023, "Parabolic Reflector Antennas and Method of Making Same". Another recent patent application; US 2010/010-8057A1, "Inflatable Solar Concentrator Baldwin Method and Apparatus" are among different attempts for making parabolic solar collectors.

SUMMARY

The invention declares a method of making stationary parabolic concave mirror and an apparatus specifically designed for this purpose. The primary goal of this invention is to make large scale parabolic mirrors quickly and accurately in an automated fashion by the aid of designed apparatus. One of the most difficult aspects of parabolic mirror construction is formation of the specific parabolic shape accurately. The invention teaches a practical method of shaping underlying base structure of the parabolic so that the mirror sheets placed over the sculpted base end up forming parabolic shaped mirror.

Another important problem addressed by this invention is the cleaning aspect of parabolic solar collector. Solar collectors require regular cleaning to keep the performance level high. Dust and dirt accumulates on reflective mirrors and degrades the reflective quality of the mirror surface. Unless the mirrors are cleaned regularly, the efficiency of the solar collector gets reduced drastically. The cleaning approach used in most contemporary solar collectors is manual cleaning using high pressure washers. If the mirror surface is large, the manual cleaning process can be very slow and tedious. The invention also teaches a method of cleaning mirror surface in an automated way utilizing the same apparatus used for construction of the parabolic structure.

The invention utilizes a robot like apparatus for construction of the parabolic mirror. The robot like apparatus has an end effecter which a suitable sculpting apparatus can be attached to suit the base material that needs to be shaped. During the construction phase different sculpting tools are used as end effectors for shaping the underlying base structure. After the construction phase is over, the end effecter is attached with cleaning apparatus which can be used for automatic cleaning of the mirror face of the solar collector. Due to the automatic nature of cleaning process which requires no manual intervention, the cleaning can be performed during night time when solar collector is not utilized.

The construction apparatus of the parabolic mirror comprises a central post and a horizontal jib connected to the post which can rotate around the central post. The horizontal jib has a trolley which can travel along the length of the jib from center position to the tip. The trolley has a vertical working arm which is positioned perpendicularly with respect to the trolley. The vertical arm mounted perpendicularly to the trolley is free to move up or down under gravity or by external means. A braking apparatus installed on the vertical working arm can stop the free movement of the arm in case it is activated. The up or down movement of the vertical working arm is further restrained by a system of pulley and inelastic string which is strategically connected to different parts of the apparatus. The system of pulley and string determines the tip position of the vertical arm as the trolley on the horizontal jib moves back and forth. The arrangement is done such that, as the trolley moves along the jib, the tip of the vertical arm is forced to follow path of a perfect parabola.

The tip of the vertical arm is used for defining the contour of the parabolic mirror. By using appropriate attachments and continuously rotating the tip of the vertical arm around the central post, the base material underneath can be sculpted in parabolic shape. Just like a lathe that shapes a metal piece by rotating and removing miniscule pieces of the base material in each rotation, the jib and the vertical arm removes material from the base material underneath to sculpt parabolic shape on the base material. By rotating the jib arm and moving the trolley along the length of the jib arm, the tip of the vertical arm can be used to shape the sand, soil or material underneath the apparatus in parabolic shape. The tip of the vertical arm needs to be equipped with appropriate tools for excavating or shaping the filler material forming the base of the collector. The brake apparatus installed on the vertical working arm is used selectively during the carving phase of the base material to limit the amount of material removed during the operation. Just as a lathe is made to remove the base material gradually in each turn, the brake mechanism used in the apparatus ensures only manageable amount is removed in each turn.

Base material can also be shaped by depositing additional material to the base material. In a different embodiment of the invention, the sculpting apparatus is made to deposit material to the base material rather than remove from it. By depositing varying amounts of filler material by means of an appropriate applicator, the base is sculpted to have parabolic shape.

Once the base material is shaped in the form of parabolic shape, the surface of the base material can be covered by concrete, foam, adhesive material, metal meshor any other agent to make the surface firm and solid. The tip of the vertical arm can be equipped with appropriate dispensing tool to apply concrete, foam, adhesive material or any other agent to the base material in a controlled manner so that dispensed material conforms to parabolic shape.

The speed of the construction process can be increased by installing more than one trolley on the horizontal jib. Each trolley has an independent vertical working arm installed on it. The movement of the vertical arm is controlled by the string and pulley arrangement mentioned before. By fixing the focal point of each arrangement the same, the tips of all vertical arms can be made to follow the same parabolic path. By attaching appropriate tools to each one of the tips, the shaping or the cleaning process can be sped up.

Using the method and the apparatus declared in this invention, the parabolic shape construction can also be made partial rather than a complete parabolic shape. This can be achieved by limiting the rotation angle of jib arm and the moving trolley within certain limits. This way a structure with partial parabolic shape can be constructed. Partial parabolic construction is valuable in case the physical space for construction is limited or the terrain is not suitable.

Using the method and the apparatus declared in this invention, the parabolic shape construction can also be tilted toward one side so that final constructed parabolic surface can be used as offset-parabola. The advantages and proper use of offset-parabola is known topeople who knows this particular art. Partial offset-parabola construction can be achieved by placing central post at a tilted angle and restricting rotation angle of the jib.

The parabolic shape can also be constructed on top of plastic, wood or metal studs using the method and the apparatus described in this invention. In such cases, the tip of the vertical arm which defines a parabolic path which can be used for adjusting the length of the braces or studs where the tips define a parabolic base for mirror.

When the construction process is over, the construction apparatus is modified with different end effecter apparatus which will be used for cleaning purposes. Since mirror needs frequent cleaning to keep performance level high, the vertical working arm of the apparatus is converted to cleaning use by installing cleaning brushes on tip of the vertical arm. The pulley and string set up which is used to determine the height of the piles is now used for determining the height of the brushes that clean the parabolic mirror. By rotating the horizontal jib incrementally and moving the vertical trolley along the horizontal jib, the mirror can be cleaned mechanically by moving brushes or cleaning apparatus following contour of the mirror surface precisely.

BRIEF DESCRIPTION OF DRAWINGS

Fig.1 shows the main parts of the parabolic mirror construction apparatus,

Fig.2 shows the construction process of the outer rim of the parabolic mirror,

Fig.3 shows the details of the tip of the horizontal jib while resting on the outer rim,

Fig. 4A shows the basic principle of parabolic mirror,

Fig. 4B shows the working principle of construction apparatus,

Fig. 4C shows the general outlook of the pulley and string arrangement with respect to the whole apparatus for determining the outlines of the parabolic shape,

Fig. 4D shows the details of the string and pulley arrangement and the vertical working arm set up,

Fig. 4E shows an alternative embodiment of the horizontal jib with more than one trolley and vertical working arm which can be used for speeding up construction and cleaning process,

Fig. 5A shows the initial stage of process of shaping underlying base material,

Fig. 5B shows the interim stage of process of shaping underlying base material with brake assembly activated to inhibit movement of vertical working arm,

Fig. 5C shows the final stage of process of shaping underlying base material,

Fig. 6 shows the block diagram of the elements that make up the apparatus,

Fig. 7 shows the flowchart of construction process,

Fig. 8 shows the flowchart of cleaning process.

DESCRIPTION

Now the method of operation and the details of the construction apparatus will be described in detail with the aid of figures.

In the following text, the terms parabolic mirror, parabolic collector all refer to the parabolic solar collector.

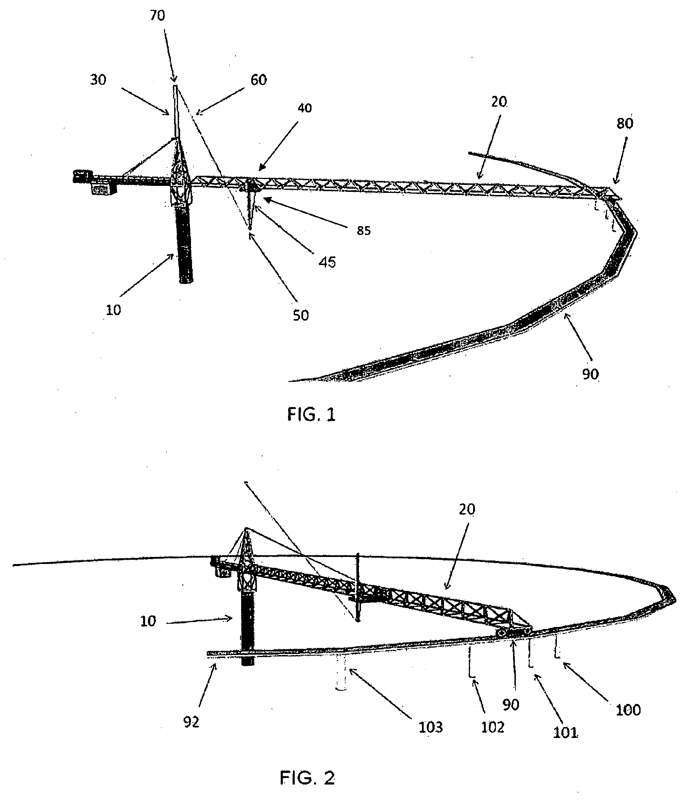

Fig.1 shows the major parts that comprise the apparatus for making parabolic mirror. The item labeled as 10 is the central post of the parabolic mirror. Item 20 is the horizontal jib which rotates around central post 10. Item labeled as 30 is the focal mast of the apparatus. Item labeled as 70 is the focal point of the parabolic mirror which is the end point of the focal mast 30. Item 40 is the trolley which can move along horizontal jib 20. Item 45 is the vertical working arm of the horizontal jib. Item 50 defines the end point of the vertical working arm 45. Item 60 is an inelastic string which is connected to point 70 on one side and to point 85 on the other side which is located on trolley 40. While going from point 70 to point 85, the inelastic string goes over the roller at point 50 and makes a triangular shape. Item labeled as 80 is the end point of the horizontal jib 20 and it is equipped with rollers that rest on rim support 90. The rim support 90 is a platform raised on supports and partially carries the weight of horizontal jib 20.

Central post 10 defines the geometric center of the parabolic solar collector and the axis where the focal point of the parabolic solar collector is located on. Since the focal point parabolic collector will be determined by the central post 10, the location and the orientation of it is of crucial importance to the performance of the solar collector. Declination angle of sun at a specific location on earth is very much related to geographical latitude of that particular place. In a preferred embodiment, the central post 10 should be slanted from perpendicular position for the amount of declination angle to receive the solar radiation in the most optimum manner. The determination of declination angle is well known to the people who are skilled in the solar collector art. By way of slanting the central post for the amount of declination angle, the parabolic collector constructed around the central post can be made to receive radiation of sun at or near perpendicular angle for maximum duration of the day.

The steps of the construction process are now explained with the aid of Fig. 2. As a first step, the central post 10 is placed in the ground where the parabolic mirror is to be constructed. As a second step the horizontal jib 20 is attached to the central post 10 in such a way that horizontal jib can rotate around the central post freely. The height of central post 10 and the attachment point of horizontal jib 20 are high enough for the horizontal jib 20 to rotate around central post 10 in an unobstructed manner. In a preferred embodiment the horizontal jib 20 is constructed using triangulated lattice structure which makes the horizontal jib lightweight yet mechanically strong.

The third step in the process parabolic mirror construction is construction of the rim support 90. In this particular step, the horizontal jib 20 is fixed at the starting point of the rim and support pile 101 is driven into ground right underneath the tip of the horizontal jib 20. The height of the pile 101 is adjusted such that, the end point of the pile is at the same height with the end point of horizontal jib 20.

The process is repeated after horizontal jib 20 is rotated slightly and pile 102 is driven into the ground ending up at the same height as the end of jib 20. After driving more support piles into the ground and repeating the process, rim runner platform 92 is installed on piles 100, 101, 102 and 103. After completion of the process, rim runner platform 92 will be supporting the end of horizontal jib 20 in the plane of movement of the horizontal jib 20.

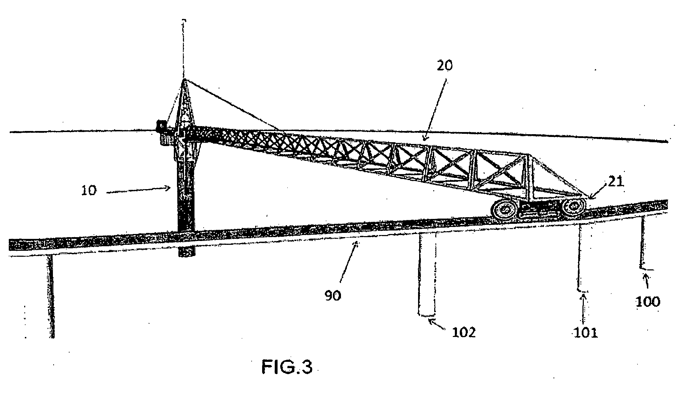

Fig. 3 shows the detailed view of the horizontal jib 20 resting on rim support 90 with the aid of rollers 21 installed at the tip of the horizontal jib 20. The rim support 90 defines the rim of the parabolic mirror and provides a support structure for the horizontal jib 20 to rest and move on.

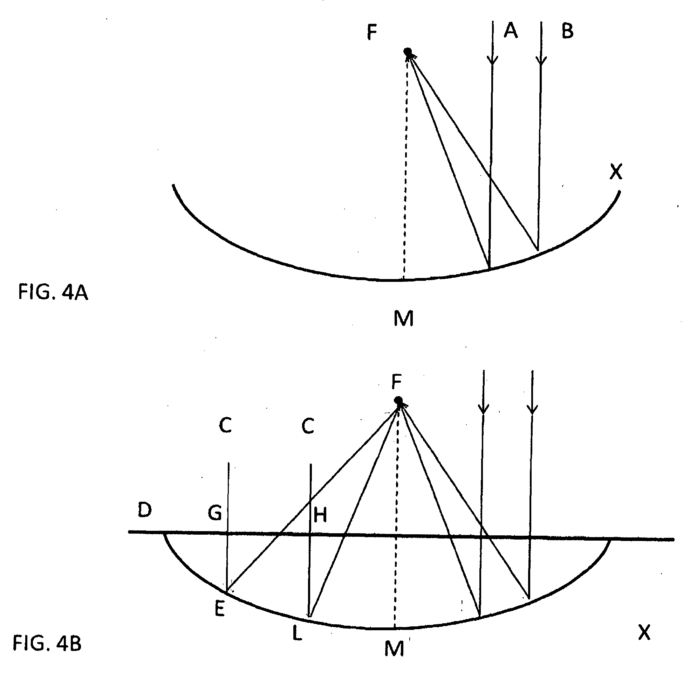

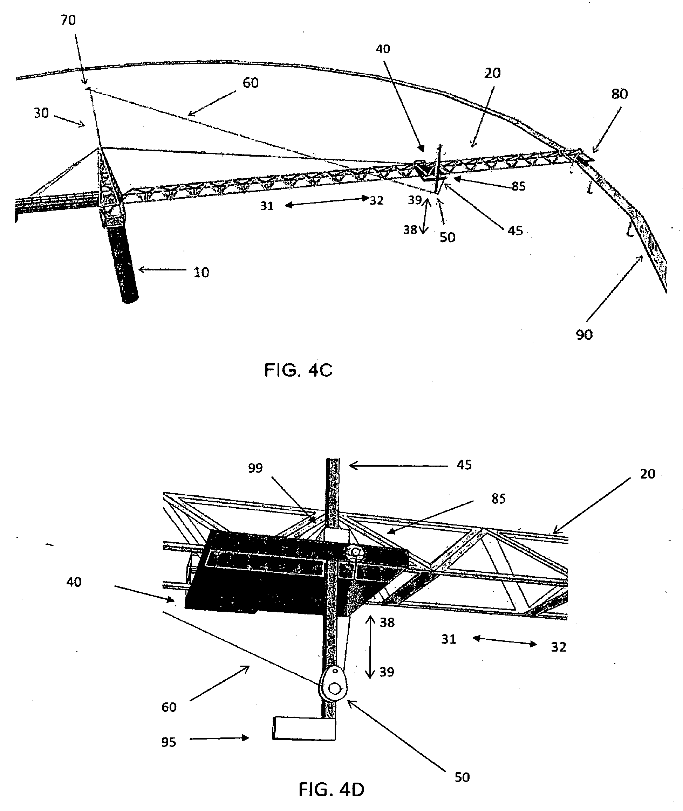

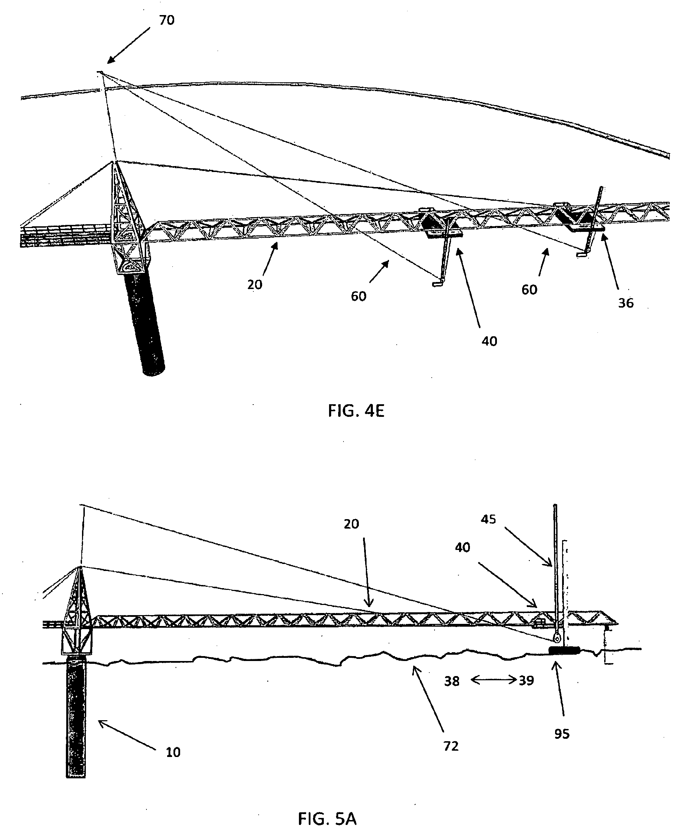

The fourth step of the construction method is explained by the aid of Fig. 4 series. Figures 4A and 4B are used for explaining the basic operational principle.

Fig 4A shows cross section of a perfect parabolic mirror. X represents the parabolic mirror with reflective face facing upwards toward sun. Rays A and B are coming from the sun which is situated directly overhead and parallel to axis MF of the parabolic mirror. F represents the focal point of the parabolic mirror. In a condition like this, the rays A and B will be reflected to point F of the mirror which is the focal point of the mirror X.

Fig. 4B shows a geometrical property of parabolic mirror. Assuming D is a line that crosses over parabolic mirror X, crossing line MF perpendicularly over center point of parabola designated as M, and C is a specific length line that is drawn perpendicularly to line D, the following equations hold true:

$$\text{distance GE} + \text{distance EF} = K \; ;$$

where K is a constant,
as we move over line D.

The same formula is also valid for another instance,

$$\text{distance HL} + \text{distance LF} = K \; ;$$

where K is a constant,

In the drawing G and H are points where line C crosses line D perpendicularly.

The apparatus makes use of this geometrical property to define outline of the parabolic mirror which is further explained in Fig. 4C. Focal mast 30 is erected on top of the central post 10 in such a way that as horizontal jib 20 turns around central post 10, the focal mast 30 also turns with the horizontal jib assembly. The end point of the focal mast 30 is marked as 70 which define the focal point of the parabolic mirror being constructed. Item 40 is a trolley that runs freely along the horizontal jib 20 in the direction of 31- 32. Item 45 is a vertical working arm installed on trolley 40 which can move up or down freely along the direction 38-39 which is parallel to central post 10 and perpendicular to horizontal jib 20. The end point of the vertical working arm 45 is designated as 50. An inelastic string 60 is connected to focal point 70 on one end and passes over a roller placed at point 50 and connected to point 85 on the other end. In this particular arrangement, as the trolley 35 moves along the horizontal jib 20 in the direction of 31-32, the tip 50 of the vertical working arm 40 defines a parabolic path. Being inelastic, the length of string 60 remains constant but height of the vertical working arm 45 changes in accordance to the principle explained in Fig. 4B. The focal point of the parabola defined through this process is designated as 70. As the position of trolley 40 and the rotational angle of horizontal jib 20 are changed, many points describing the outline of the parabolic profile are obtained.

The principle behind defining parabola is further explained as follows: Points 70, 50 and 85 in Fig. 4C define a triangle. In this triangle the following geometrical relation exist due to inelastic nature of the string:

• (the distance from 70 to 50) + (the distance from 50 to 85) = constant

• Vertical working arm 45 is perpendicular to horizontal jib 20 and can move up or down freely,

As a result of these constraints, the height of the point 50 which is the end point of vertical working arm 45 varies as the trolley 40 is moved on horizontal jib 20 from point 80 toward the center post 10.

The relationship between vertical working arm and inelastic string as well as further details of the structure of trolley is explained with the aid of Fig. 4D. Trolley 40 is installed on horizontal jib 20 and can travel freely along the jib in the direction of 31 - 32. Vertical working arm 45 has a roller attached at the end of vertical working arm which is designated as 50. Vertical working arm 45 is free to move in the direction of 38-39. Inelastic string 60 which is connected to focal point on one end passes under the roller 50 and gets attached to the point 85 on the other end of the string. Point 85 is on trolley 40 and in close proximity to where vertical working arm 45 is connected to trolley 40. Item 95 indicates the sculpting apparatus connected to the end of vertical working arm 45. Item 99 indicates a brake assembly which can prevent movement of vertical working arm 40 in the direction of 38-39 when activated.

A different embodiment of the horizontal jib arm is shown in Fig. 4E where more than one trolley is installed on the horizontal jib arm. Horizontal jib 20 has two trolleys 40 and 36 installed on horizontal jib 20. Each trolley 35, 36 have their own inelastic string 60 which connects the trolley to focal point 70 using the arrangement explained in Fig. 4D.

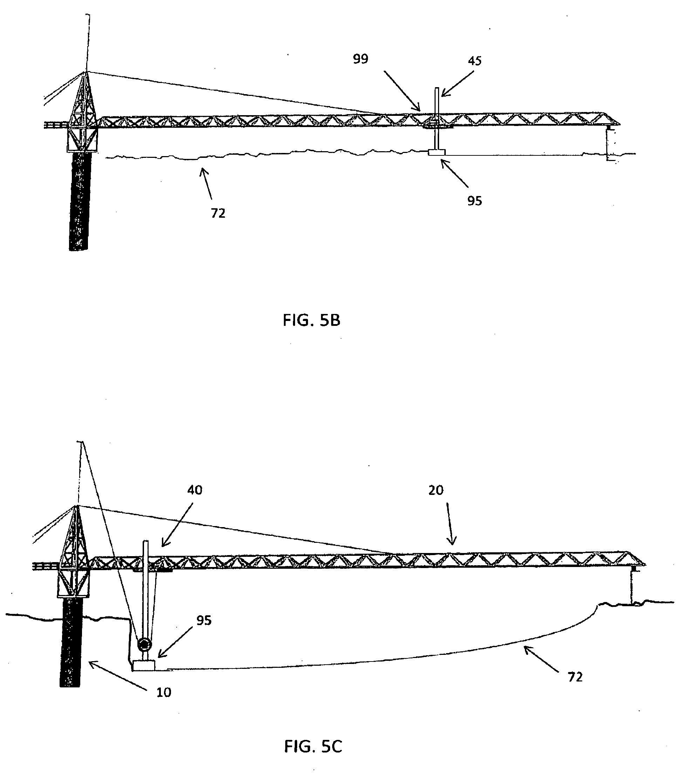

Fig. 5A, 5B and 5C explains the operation of the apparatus for shaping the underlying structure. Fig. 5A shows initial state of the operation before the underlying base material is sculpted. In Fig. 5A the Item 72 indicates the underlying base material which needs to be sculpted. Item 45 is the vertical working arm with sculpting apparatus 95 attached to the end. By rotating the horizontal jib 20 around central post 10 and moving trolley 40 incrementally along the direction 38-39, the vertical working arm 45 shapes the underlying base material 72 with sculpting apparatus 95. Fig. 5B indicates the interim stage of the fabrication process where the depth of the vertical working arm 45 is fixed by the braking assembly 99 to enable removal of reasonable amount of base material 72 during the sculpting process by the sculpting apparatus 95. Fig. 5C indicates the final stage of the operation where the underlying base material 72 is sculpted in parabolic shape by sculpting apparatus 95 after making repeated number of turns around central post 10 and repeatedly moving trolley 40 along horizontal jib 20. Once the underlying base material is sculpted in parabolic form, the underlying base material 72 is covered by mirror material to finish the construction of the parabolic mirror.

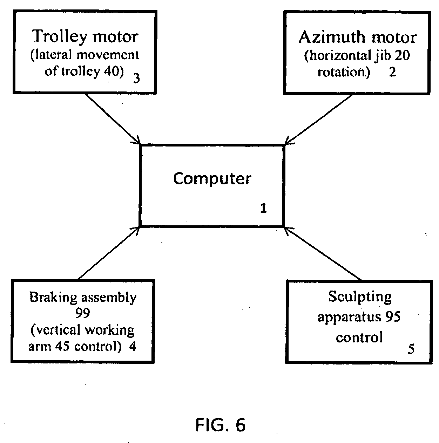

Fig. 6 shows the block diagram of the control system of the apparatus where the computer block 1 is interfaced to azimuth motor 2 which rotates the horizontal jib 20 around central post 10 axis, trolley motor 3 controlling position of the trolley 40 travelling along horizontal jib 20, brake assembly 4 which inhibits movement of vertical working arm selectively and sculpting apparatus control 5 which turns sculpting apparatus on or off selectively. Computer 1 also runs algorithm for construction and cleaning process.

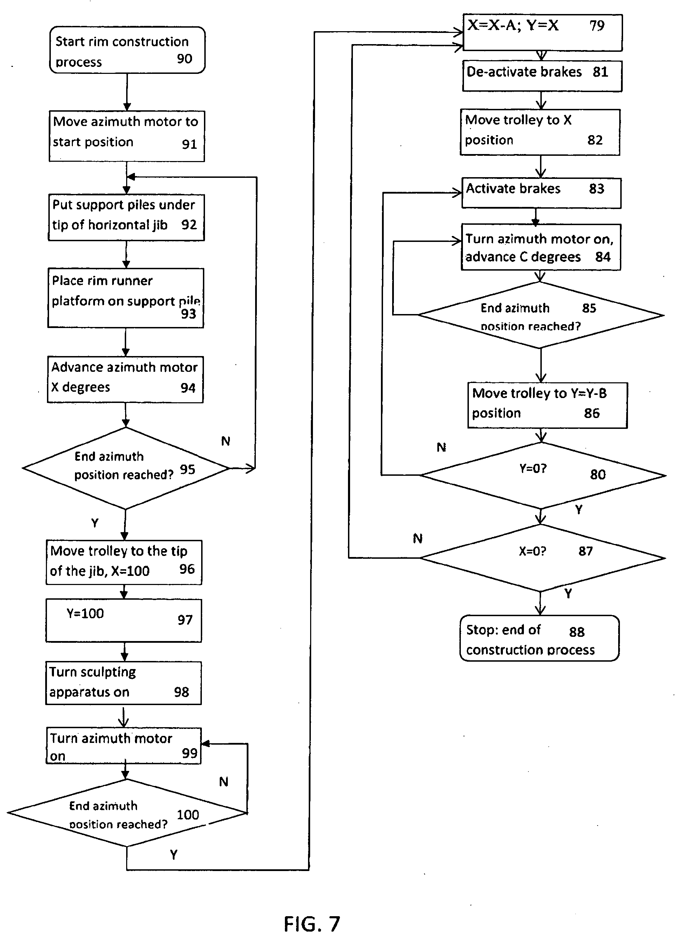

The flowchart of the operation is illustrated in Fig. 7 which shows the flow chart of the operation during construction phase. The flowchart describes the steps for constructing the rim runner and sculpting of the base material.

The rim construction process (90) starts by bringing the azimuth motor to starting position (91). Starting position is an arbitrary position, but once selected, it should be used as the starting position throughout the construction process. In this position the trolley is moved until the far end of the horizontal jib opposite to the central post (92). At this stage, the rim runner platform support piles are driven into the ground and part of rim runner platform is placed on top of them (93). The height of the support piles should be as high as the tip of the horizontal jib. After the pile driving process is over, azimuth motor is activated and azimuth angle is increased for a predetermined amount (94). Horizontal jib is now pointing to a different support pile location. The process of driving support pile to ground is repeated for this new position (93). The process is repeated over and over again until the starting position is reached again (95). At the end of this process, the rim support piles are all driven into ground and the rim runner platform is installed completely on these support piles. Now the tip of the horizontal jib can be supported by the rim runner platform underneath.

The next process starts from the starting position of the horizontal jib. In the flowchart Y and X indicate distance of the trolley from the center. Y=100 means trolley is at the farthest point from the central post on the horizontal jib. The same notation is used for X, where X=100 means farthest location from the central post. The trolley is moved to the far end of the horizontal jib (96). The sculpting apparatus is turned on (98),and azimuth motor is started (99) to start the sculpting process. Horizontal jib makes a full turn while sculpting apparatus is on (100). This way, the outermost circumference of the parabolic shape is constructed. The process is repeated by moving trolley closer to center gradually (79). While doing this, the vertical working arm is allowed to adjust its height for parabolic shape with brakes in de-activated state (81, 82). Once the trolley is in the new position with the vertical working arm height is adjusted to the new position, the brake assembly is activated and height of the vertical working arm is fixed (83). Now the azimuth motor is turned on (84) and the horizontal jib is allowed to make a full turn (85). After rotation is completed, the trolley is further moved closer to central post with the height of vertical working arm is in fixed position (86). This process of turning azimuth motor and moving trolley closer is repeated until trolley reaches the center position (80). This process scrapes the surface of the underlying base material and sculpts a surface with even height. (This is an intermediate stage of the process which is indicated in Fig. 5B.) After this process, the trolley is moved into the previous position which is indicated as process (79) in Fig. 7. While doing this the brake is de-activated (81) to adjust to the new height level (82) dictated by the parabolic shape and the process is repeated until the parabolic shape sculpting process is finished (88).

The cleaning process is also controlled by the computer system using the same control system shown in Fig. 6.

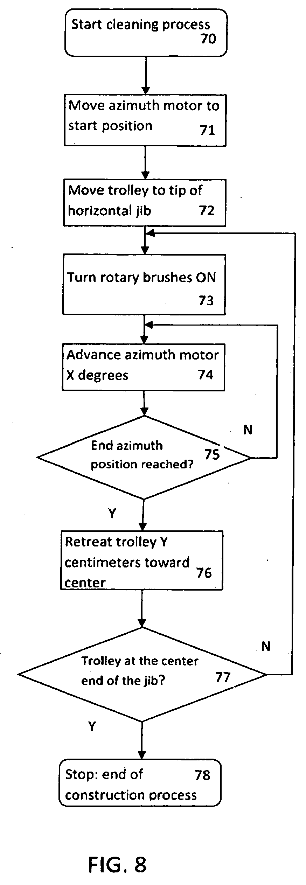

Fig. 8 shows the flowchart of the cleaning process which essentially moves the motors in an organized way to clean the mirror. Before the cleaning process end effecter of the vertical working arm is equipped with cleaning brushes. The cleaning process (70) starts by moving azimuth motor to the starting position (71). The starting position is an arbitrary position selected, but once selected, it should be maintained as the starting position throughout the cleaning process. The trolley is moved into the far end of the horizontal jib near the rim (72). The cleaning brush motor is turned on (73) and azimuth motor is rotated gradually (74) which causes the horizontal jib to rotate. Every time starting position is reached the vertical trolley is pulled toward the center (76) and process is repeated. Eventually every part of the mirror is cleaned through this process. At the end of the cleaning process the trolley is parked at a position near the central post and cleaning process is finished (78).

**Claims**

1. A method of manufacturing a parabolic solar collector, said method being **characterized by**

   placing a central post (10) into the ground, the central post (10) having length, depth, and orientation in accordance with the desired parabolic solar collector,

   attaching a horizontal jib (20) to the central post (10),

   constructing a rim support (90) under a tip (80) of the horizontal jib (20),

   attaching at least one trolley (40) that can move along the horizontal jib (20),

   attaching a vertical working arm (45) to the trolley (40) in a perpendicular position that can move freely up or down on the trolley (40),

   restraining the vertical working arm (45) with an inelastic string (60) connected to a tip (70) of the central post (10) on a first end of the string (60) and to the trolley (40) on a second end of the string (60) while the vertical working arm rests (45) on the inelastic string (60) by way of rollers,

   attaching a sculpting apparatus (95) to the tip of the vertical working arm (45) to shape an underlying base material (72) underneath the vertical arm (45),

   turning the horizontal jib (20) incrementally around the central post (10) in angular increments and shaping the underlying base material (72) with the sculpting apparatus (95),

   moving the trolley (40) along the horizontal jib (20) incrementally with distance increments and shaping the underlying base material (72) with the sculpting apparatus (95),

placing a firming agent on the underlying base material (72), and

placing at least one sheet with a mirror like surface on the underlying base material to form a parabolic shaped reflecting surface.

2. The method of claim 1, **characterized in that** the horizontal jib (20) turns freely around the central post (10) and the rim support is placed under a tip (80) of the horizontal jib (20).

3. The method of claim 1, **characterized in that** the vertical working arm (45) moves freely up and down under gravity or by hydraulic, pneumatic, electrical means.

4. The method of claim 1, **characterized in that** the inelastic string (60) connected to the tip (70) of the central post (10) is only long enough to let the trolley (40) reach the tip (80) of the horizontal jib (20).

5. The method of claim 1, **characterized in that** the sculpting apparatus (95) to shape the base material comprises tool, dispenser, cutter, equipment operated by pneumatic, hydraulic, electrical means.

6. The method of claim 1, **characterized by** selecting increments for turning and moving in such a way that the underlying base material (72) forms a parabolic shape.

7. The method of claim 1, **characterized in that** the firming agent comprises concrete, metallic, chemical, biological material.

8. The method of claim 1, **characterized in that** the said sheet with a mirror like surface comprises one continuous sheet forming a parabolic shaped reflecting surface.

9. The method of claim 1, **characterized in that** said sheet with a mirror like surface comprises a plurality of sheets with mirror like surfaces arranged to form a parabolic reflecting surface.

10. An apparatus for manufacturing a parabolic solar collector, said apparatus being **characterized by**
a central post (10),
a horizontal jib (20),
a set of one or more trolley (40) travelling along the horizontal jib (20),
an inelastic string (60) connected having a first end connected to a tip (70) of the central post (10) and a second end connected to the trolley (40),
a vertical working arm (45) placed perpendicularly on the trolley (40), the vertical working arm (45) moving freely up or down and resting on the inelastic string (60),
a sculpting apparatus (95) placed at a tip (80) of the vertical working arm (45),
a motor (2) for incrementally turning the horizontal jib (20) around the central post (10),
a motor (3) for moving the trolley (40) along the horizontal jib (20) incrementally,
a brake assembly (4) to prevent the vertical working arm (45) from moving freely when activated,
a set of one or more sheets with mirror like surface,
a computer (1) for controlling the movement of the trolley (40), the horizontal jib (20), the vertical working arm (45), the brake assembly (4), the sculpting apparatus (95) and,
a set of one or more brushes.

11. The apparatus of claim 10, **characterized in that** the horizontal jib (20) is attached to the central post (10) and rotated by the motor (2) in such a way that the horizontal jib (20) rotates around the central post (10) under the control of the computer (1).

12. The apparatus of claim 10, **characterized in that** the computer (1) is configured to control movement of the trolley (40) by way of a motor (3) along the horizontal jib (20).

13. The apparatus of claim 10, **characterized in that** the inelastic string (60) is long enough to let the trolley (40) reach no further than an end (80) of the horizontal jib (20).

14. The apparatus of claim 10, **characterized in that** the vertical working arm (45) resting on the inelastic string (60) is forced to move up or down as the trolley (40) travels along the horizontal jib (20) as a result of changing geometry of the inelastic string (60).

15. The apparatus of claim 10, **characterized in that** the sculpting apparatus (95) attached to the vertical arm (45) sculpts the underlying base material (72) underneath the vertical working arm (45) by actions comprising cutting, excavating, evaporating, sweeping, tamping, depositing.

16. The apparatus of claim 15, **characterized in that** the underlying base material (72) is covered by one or more sheets with mirror like surface forming reflective surface over the underlying base material (72).

17. The apparatus of claim 10 **characterized in that** the brake assembly (4) prevents free movement of the vertical working arm (45) under the control of the computer (1).

18. The apparatus of claim 10, **characterized in that** the set of brushes attached to the vertical working arm (45) cleans mirror sheets underneath the vertical working arm (45) by actions comprising rotation, sweeping, polishing, rinsing and squirting.

## Patentansprüche

1. Verfahren zum Herstellen eines parabolischen Sonnenkollektors, wobei das Verfahren **gekennzeichnet ist durch**:

   Platzieren eines zentralen Pfahls (10) im Boden, wobei der zentrale Pfahl (10) eine Länge, Tiefe und Orientierung gemäß dem gewünschten parabolischen Sonnenkollektor aufweist,
   Anbringen eines horizontalen Auslegers (20) an dem zentralen Pfahl (10),
   Bilden eines Randträgers (90) unter einer Spitze (80) des horizontalen Auslegers (20),
   Anbringen wenigstens eines Wagens (40), welcher sich entlang des horizontalen Trägers (20) bewegen kann,
   Anbringen eines vertikalen Arbeitsarms (45) an dem Wagen (40) in einer rechtwinkligen Richtung, welcher sich an dem Wagen (40) frei nach oben oder unten bewegen kann,
   Haltern des vertikalen Arbeitsarms (45) mit einem inelastischen Strang (60), welcher mit einer Spitze (70) des zentralen Pfahls (10) an einem ersten Ende des Strangs (60) und mit dem Wagen (40) an einem zweiten Ende des Strangs (60) verbunden ist, während der vertikale Arbeitsarm (45) auf dem inelastischen Strang (60) mittels Rollen ruht,
   Anbringen einer formgebenden Vorrichtung (95) an der Spitze des vertikalen Arbeitsarms (45), um ein darunterliegendes Basismaterial (72) unterhalb des vertikalen Arms (45) zu formen,
   inkrementelles Drehen des horizontalen Auslegers (20) um den zentralen Pfahl (10) in Winkelinkrementen und Formen des darunterliegenden Basismaterials (72) mit der formgebenden Vorrichtung (95),
   inkrementelles Bewegen des Wagens (40) entlang des horizontalen Auslegers (20) mit Abstandsinkrementen und Formen des darunterliegenden Basismaterials (72) mit der formgebenden Vorrichtung (95),
   Platzieren eines Härtungsmittels auf dem darunterliegenden Basismaterial (72), und
   Platzieren wenigstens einer Lage mit einer spiegelartigen Fläche auf dem darunterliegenden Basismaterial, um eine parabolisch geformte reflektierende Fläche zu bilden.

2. Verfahren nach Anspruch 1, **dadurch gekenn-**

**zeichnet, dass** der horizontale Ausleger (20) sich frei um den zentralen Pfahl (10) dreht und der Randträger unter einer Spitze (80) des horizontalen Auslegers (20) platziert ist.

3. Verfahren nach Anspruch 1, **dadurch gekennzeichnet, dass** der vertikale Arbeitsarm (45) sich frei unter der Schwerkraft oder durch hydraulische, pneumatische, elektrische Mittel nach oben und unten bewegt.

4. Verfahren nach Anspruch 1, **dadurch gekennzeichnet, dass** der inelastische Strang (60), welcher mit der Spitze (70) des zentralen Pfahls (10) verbunden ist, gerade lang genug ist, um den Wagen (40) die Spitze (80) des horizontalen Auslegers (20) erreichen zu lassen.

5. Verfahren nach Anspruch 1, **dadurch gekennzeichnet, dass** die formgebende Vorrichtung (95) zum Formen des Basismaterials Werkzeug, Abgabevorrichtung, Schneider, Ausrüstung, durch pneumatische, hydraulische, elektrische Mittel betrieben, umfasst.

6. Verfahren nach Anspruch 1, **dadurch gekennzeichnet, dass** Inkremente zum Drehen und Bewegen derart ausgewählt werden, dass das darunterliegende Basismaterial (72) eine parabolische Form bildet.

7. Verfahren nach Anspruch 1, **dadurch gekennzeichnet, dass** das Härtungsmittel Beton, metallisches, chemisches, biologisches Material umfasst.

8. Verfahren nach Anspruch 1, **dadurch gekennzeichnet, dass** die Lage mit einer spiegelartigen Fläche eine kontinuierliche Lage umfasst, welche eine parabolisch geformte reflektierende Fläche bildet.

9. Verfahren nach Anspruch 1, **dadurch gekennzeichnet, dass** die Lage mit einer spiegelartigen Fläche eine Mehrzahl von Lagen mit spiegelartigen Flächen umfasst, welche dazu eingerichtet sind, eine parabolische reflektierende Fläche zu bilden.

10. Vorrichtung zum Herstellen eines parabolischen Sonnenkollektors, wobei die Vorrichtung **gekennzeichnet ist durch**:

    einen zentralen Pfahl (10),
    einen horizontalen Ausleger (20),
    einen Satz von einem oder mehreren sich entlang des horizontalen Trägers (20) fahrenden Wagen (40),
    einen inelastischen Strang (60), welcher verbunden ist, indem ein erstes Ende mit einer Spitze (70) des zentralen Pfahls (10) verbunden ist und ein zweites Ende mit dem Wagen (40) verbunden ist,

einen vertikalen Arbeitsarm (45), welcher rechtwinklig an dem Wagen (40) platziert ist, wobei sich der vertikale Arbeitsarm (45) frei nach oben oder unten bewegt und an dem inelastischen Strang (60) ruht,

eine formgebende Vorrichtung (95), welche an einer Spitze (80) des vertikalen Arbeitsarms (45) platziert ist,

einen Motor (2) zum inkrementellen Drehen des horizontalen Trägers (20) um den zentralen Pfahl (10),

einen Motor (3) zum inkrementellen Bewegen des Wagens (40) entlang des horizontalen Trägers (20),

eine Bremsanordnung (4) zum Verhindern, dass sich der vertikale Arbeitsarm (45) frei bewegt, wenn sie aktiviert ist,

einen Satz von einer oder mehreren Lagen mit spiegelartigen Flächen,

einen Computer (1) zum Steuern/Regeln der Bewegung des Wagens (40), des horizontalen Trägers (20), des vertikalen Arbeitsarms (45), der Bremsanordnung (4), der formgebenden Vorrichtung (95), und

einen Satz von einer oder mehreren Bürsten.

11. Vorrichtung nach Anspruch 10, **dadurch gekennzeichnet, dass** der horizontale Träger (20) an dem zentralen Pfahl (10) angebracht ist und derart von dem Motor (2) rotiert wird, dass der horizontale Träger (20) um den zentralen Pfahl unter Steuerung/Regelung des Computers (1) rotiert.

12. Vorrichtung nach Anspruch 10, **dadurch gekennzeichnet, dass** der Computer (1) dazu eingerichtet ist, eine Bewegung des Wagens (40) mittels eines Motors (3) entlang dem horizontalen Träger (20) zu steuern/regeln.

13. Vorrichtung nach Anspruch 10, **dadurch gekennzeichnet, dass** der inelastische Strang (60) lang genug ist, um den Wagen (40) nicht weiter als bis zu einem Ende (80) des horizontalen Trägers (20) reichen zu lassen.

14. Vorrichtung nach Anspruch 10, **dadurch gekennzeichnet, dass** der an dem inelastischen Strang (60) ruhende vertikale Arbeitsarm (45) dazu veranlasst wird, sich frei nach oben oder unten zu bewegen, wenn der Wagen (40) entlang dem horizontalen Träger (20) als Folge einer sich ändernden Geometrie des inelastischen Strangs (60) fährt.

15. Vorrichtung nach Anspruch 10, **dadurch gekennzeichnet, dass** die an dem vertikalen Arm (45) angebrachte formgebende Vorrichtung (95) das darunterliegende Basismaterial (72) unterhalb des vertikalen Arbeitsarms (45) durch Vorgänge formt, die Schneiden, Ausheben, Verdampfen, Kehren, Stampfen, Ablagern umfassen.

16. Vorrichtung nach Anspruch 15, **dadurch gekennzeichnet, dass** das darunterliegende Basismaterial (72) von einer oder mehreren Lagen mit spiegelartigen Flächen bedeckt ist/wird, welche eine reflektierende Fläche über dem darunterliegenden Basismaterial (72) bilden.

17. Vorrichtung nach Anspruch 10, **dadurch gekennzeichnet, dass** die Bremsanordnung (4) eine freie Bewegung des vertikalen Arbeitsarms (45) unter der Steuerung/Regelung des Computers (1) verhindert.

18. Vorrichtung nach Anspruch 10, **dadurch gekennzeichnet, dass** der an dem vertikalen Arbeitsarm (45) angebrachte Satz von Bürsten Spiegellagen unterhalb des vertikalen Arbeitsarms (45) durch Vorgänge reinigt, welche Rotation, Kehren, Polieren, Spülen und Abspritzen umfassen.

## Revendications

1. Procédé de fabrication d'un collecteur solaire parabolique, ledit procédé étant **caractérisé par** :

le placement d'un poteau central (10) dans le sol, le poteau central (10) possédant une longueur, une profondeur, et une orientation conformément au collecteur solaire parabolique souhaité,
la fixation d'une flèche horizontale (20) au poteau central (10),
la construction d'un support périphérique (90) sous un embout (80) de la flèche horizontale (20),
la fixation d'au moins un chariot (40) qui peut se déplacer le long de la flèche horizontale (20),
la fixation d'un bras de travail vertical (45) au chariot (40), dans une position perpendiculaire, qui peut se déplacer librement vers le haut ou vers le bas sur le chariot (40),
la retenue du bras de travail vertical (45) avec un câble non élastique (60) raccordé à un embout (70) du poteau central (10) sur une première extrémité du câble (60) et au chariot (40) sur une seconde extrémité du câble (60) alors que le bras de travail vertical repose (45) sur le câble non élastique (60) par l'intermédiaire de rouleaux,
la fixation d'un appareil de sculptage (95) à l'embout du bras de travail vertical (45) pour façonner un matériau de base sous-jacent (72) en dessous du bras vertical (45),
la rotation incrémentale de la flèche horizontale (20) autour du poteau central (10), en des incréments angulaires, et le façonnage du matériau de base sous-jacent (72) avec l'appareil de sculptage (95),
le déplacement incrémental du chariot (40) le long de la flèche horizontale (20), avec des incréments de distance, et le façonnage du matériau de base sous-jacent (72) avec l'appareil de sculptage (95),
le placement d'un agent de raffermissement sur le matériau de base sous-jacent (72), et
le placement d'au moins une feuille avec une surface similaire à un miroir sur le matériau de base sous-jacent pour former une surface réfléchissante de forme parabolique.

2. Procédé selon la revendication 1, **caractérisé en ce que** la rotation de la flèche horizontale (20) se fait librement autour du poteau central (10) et le support périphérique est placé sous un embout (80) de la flèche horizontale (20).

3. Procédé selon la revendication 1, **caractérisé en ce que** le bras de travail vertical (45) se déplace librement vers le haut et vers le bas sous gravité ou par l'intermédiaire de moyens hydrauliques, pneumatiques, électriques.

4. Procédé selon la revendication 1, **caractérisé en ce que** le câble non élastique (60) raccordé à l'embout (70) du poteau central (10) est seulement suffisamment long pour laisser le chariot (40) atteindre l'embout (80) de la flèche horizontale (20).

5. Procédé selon la revendication 1, **caractérisé en ce que** l'appareil de sculptage (95) pour façonner le matériau de base comprend un outil, un distributeur, un dispositif de coupe, un équipement actionné par des moyens pneumatiques, hydrauliques, électriques.

6. Procédé selon la revendication 1, **caractérisé par** la sélection d'incréments pour la rotation et le déplacement de manière telle que le matériau de base sous-jacent (72) présente une forme parabolique.

7. Procédé selon la revendication 1, **caractérisé en ce que** l'agent de raffermissement comprend un matériau en béton, métallique, chimique, biologique.

8. Procédé selon la revendication 1, **caractérisé en ce que** ladite feuille avec une surface similaire à un miroir comprend une feuille continue formant une surface réfléchissante de forme parabolique.

9. Procédé selon la revendication 1, **caractérisé en ce que** ladite feuille avec une surface similaire à un miroir comprend une pluralité de feuilles avec des surfaces similaires à un miroir agencées pour former une surface réfléchissante parabolique.

10. Appareil pour fabriquer un collecteur solaire parabolique, ledit appareil étant **caractérisé par** :

   un poteau central (10),
   une flèche horizontale (20),
   un jeu d'un ou de plusieurs chariots (40) se déplaçant le long de la flèche horizontale (20),
   un câble non élastique (60) raccordé, possédant une première extrémité raccordée à un embout (70) du poteau central (10) et une seconde extrémité raccordée au chariot (40),
   un bras de travail vertical (45) placé perpendiculairement sur le chariot (40), le bras de travail vertical (45) se déplaçant librement vers le haut ou vers le bas et reposant sur le câble non élastique (60),
   un appareil de sculptage (95) placé à un embout (80) du bras de travail vertical (45),
   un moteur (2) pour la rotation incrémentale de la flèche horizontale (20) autour du poteau central (10),
   un moteur (3) pour le déplacement incrémental du chariot (40) le long de la flèche horizontale (20),
   un ensemble de freinage (4) pour empêcher le bras de travail vertical (45) de se déplacer librement lorsqu'il est activé,
   un jeu d'une ou de plusieurs feuilles avec une surface similaire à un miroir,
   un ordinateur (1) pour commander le déplacement du chariot (40), de la flèche horizontale (20), du bras de travail vertical (45), de l'ensemble de freinage (4), de l'appareil de sculptage (95), et
   un jeu d'une ou de plusieurs brosses.

11. Appareil selon la revendication 10, **caractérisé en ce que** la flèche horizontale (20) est fixée au poteau central (10) et tournée par le moteur (2) de manière telle que la flèche horizontale (20) tourne autour du poteau central (10) selon la commande de l'ordinateur (1).

12. Appareil selon la revendication 10, **caractérisé en ce que** l'ordinateur (1) est configuré pour commander le déplacement du chariot (40) par l'intermédiaire d'un moteur (3) le long de la flèche horizontale (20).

13. Appareil selon la revendication 10, **caractérisé en ce que** le câble non élastique (60) est suffisamment long pour laisser le chariot (40) aller pas plus loin qu'une extrémité (80) de la flèche horizontale (20).

14. Appareil selon la revendication 10, **caractérisé en**

**ce que** le bras de travail vertical (45) reposant sur le câble non élastique (60) est forcé de se déplacer vers le haut ou vers le bas lorsque le chariot (40) se déplace le long de la flèche horizontale (20) en conséquence de géométrique changeante du câble non élastique (60).

15. Appareil selon la revendication 10, **caractérisé en ce que** l'appareil de sculptage (95) fixé au bras vertical (45) façonne le matériau de base sous-jacent (72) en dessous du bras de travail vertical (45) par des actions comprenant la coupe, l'excavation, l'évaporation, le balayage, le damage, le dépôt.

16. Appareil selon la revendication 15, **caractérisé en ce que** le matériau de base sous-jacent (72) est couvert par une ou plusieurs feuilles avec une surface similaire à un miroir formant une surface réfléchissante sur le matériau de base sous-jacent (72).

17. Appareil selon la revendication 10, **caractérisé en ce que** l'ensemble de freinage (4) empêche le déplacement libre du bras de travail vertical (45) selon la commande de l'ordinateur (1).

18. Appareil selon la revendication 10, **caractérisé en ce que** le jeu de brosses fixé au bras de travail vertical (45) nettoie des feuilles à miroir en dessous du bras de travail vertical (45) par des actions comprenant la rotation, le balayage, le polissage, le rinçage et l'injection.

FIG. 1

FIG. 2

FIG.3

F     A   B

X

**FIG. 4A**

M

F

C      C

D   G     H

E

L    M        X

**FIG. 4B**

FIG. 4C

FIG. 4D

FIG. 4E

FIG. 5A

FIG. 5B

FIG. 5C

| Trolley motor (lateral movement of trolley 40) 3 | Azimuth motor (horizontal jib 20 rotation) 2 |

Computer 1

| Braking assembly 99 (vertical working arm 45 control) 4 | Sculpting apparatus 95 control 5 |

FIG. 6

Start rim construction process  90

Move azimuth motor to start position  91

Put support piles under tip of horizontal jib  92

Place rim runner platform on support pile  93

Advance azimuth motor X degrees  94

End azimuth position reached?  95

N

Y

Move trolley to the tip of the jib, X=100  96

Y=100  97

Turn sculpting apparatus on  98

Turn azimuth motor on  99

End azimuth position reached?  100

N

Y

X=X-A; Y=X  79

De-activate brakes  81

Move trolley to X position  82

Activate brakes  83

Turn azimuth motor on, advance C degrees  84

End azimuth position reached?  85

Move trolley to Y=Y-B position  86

N

Y=0?  80

Y

N

X=0?  87

Y

Stop: end of construction process  88

FIG. 7

19

```
┌─────────────────────┐
│ Start cleaning process │
│                  70   │
└─────────────────────┘
          │
          ▼
┌─────────────────────┐
│ Move azimuth motor to │
│ start position   71   │
└─────────────────────┘
          │
          ▼
┌─────────────────────┐
│ Move trolley to tip of │
│ horizontal jib    72  │
└─────────────────────┘
          │
          ▼
┌─────────────────────┐
│ Turn rotary brushes ON │
│                  73   │
└─────────────────────┘
          │
          ▼
┌─────────────────────┐
│ Advance azimuth motor │
│ X degrees        74   │
└─────────────────────┘
          │
          ▼
        ◇ End azimuth        N
          position reached? 75 ──┐
          │ Y
          ▼
┌─────────────────────┐
│ Retreat trolley Y     │
│ centimeters toward 76 │
│ center                │
└─────────────────────┘
          │
          ▼
        ◇ Trolley at the center   N
          end of the jib?    77 ──┐
          │ Y
          ▼
┌─────────────────────┐
│ Stop: end of      78  │
│ construction process  │
└─────────────────────┘
```

# FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4124277 A
- US 4860023 A
- US 20100108057 A1

### Non-patent literature cited in the description

- **H. E. IMADOJEMU.** *Energy Conversion Management Journal,* 1995, vol. 36 (4), 225-237
- **S. KALOGIROU.** *Journal of Recent Patents on Engineering,* 2007, vol. #1, 23-33
- **KALOGIROU.** *Recent Patents in Solar Energy Collectors and Applications*